Europäisches Patentamt

European Patent Office

Office européen des brevets

(11) Publication number: 0 510 283 A2

# EUROPEAN PATENT APPLICATION

(21) Application number: 91311993.9

(22) Date of filing: 23.12.91

(51) Int. Cl.5: G11B 7/135, G11B 7/125

(30) Priority: 23.04.91 JP 92356/91

(43) Date of publication of application:
28.10.92 Bulletin 92/44

(84) Designated Contracting States:
DE FR GB

(71) Applicant: PIONEER ELECTRONIC
CORPORATION
No. 4-1, Meguro 1-chome
Meguro-ku Tokyo 153(JP)

(72) Inventor: Takei, Kiyoshi, c/o Corporate Res.
and Dev. Lab.
Pioneer Electronic Corporation, 6-1-1, Fujimi
Tsurugashima-shi, Saitama 350-02(JP)
Inventor: Chikuma, Kiyofumi, c/o Corporate
Res. and Dev. Lab
Pioneer Electronic Corporation, 6-1-1, Fujimi
Tsurugashima-shi, Saitama 350-02(JP)

(74) Representative: Tomlinson, Kerry John et al
Frank B. Dehn & Co. European Patent
Attorneys Imperial House 15-19 Kingsway
London WC2B 6UZ(GB)

(54) Optical pickup device.

(57) An optical pickup device for use in an information reproducing apparatus comprises: an irradiation optical system converging a laser beam as a spot onto a recording portion (11) having information recorded along a track thereon, and including a light intensity modulator (5) disposed in the optical path of the laser beam having a central portion (6) for interrupting the center of the laser beam in cross-section and a peripheral portion for transmitting the periphery of the laser beam in cross-section; and a detection optical system for guiding light reflected from the spot toward a photodetector (12), wherein the detection optical system includes a slit member (18) arranged in front of a light receiving surface of the photodetector (12) and having a slit opening (19) designed in such a manner that the longitudinal direction (19a) of the slit opening (19) in the shadow of the slit member (18) on the recording portion (11) when the slit member (18) is projected on the recording portion (11) through the detection optical system or equivalent, is substantially parallel to the moving direction of the recording portion (11), whereby the recorded data is reproduced by an output signal provided from the photodetector (12).

Fig. 1

The present invention relates to an optical pickup device to be used for an information recording and reproducing apparatus for recording and reproducing data from a recording medium such as an optical disk by using light such as a laser beam.

Such an optical pickup device converges a laser beam emitted from a laser source onto the surface of a data-carrying optical disk as a very small spot and guides the light reflected from the converging point toward a photodetector so that the recording and reproducing apparatus reproduces data.

An example of such an optical pickup device has been proposed, in which a very small spot is formed on the surface of an optical disk while interrupting or decreasing light intensity near the pupil center of an irradiating laser beam in an irradiation optical system by means of a light intensity modulator so that only the main lobe of the reflected light from said spot is guided toward a photodetector (Japanese Patent Application laid-open No. 2-12625). In the light intensity modulator of such an optical pickup device, the width of the portion to be interrupted and decreased and the width of the transmitting portion are determined according to the distance between the second order side lobes. This is because the side lobe components to be eliminated from the light reflected from the spot are the second order diffraction components or more orders.

In such a conventional optical pickup device, however, even if the intensity of the light converged on the optical disk surface is decreased at the pupil center, the side lobes are not sufficiently removed from the reflected light in the modulation degree of the regenerated signal of a high spatial frequency.

An object of the present invention is to provide an optical pickup device being capable of decreasing the intensity of the side lobes of the light reflected from the spot so as to reproduce data in a more satisfactory manner.

According to the present invention, an optical pickup device for use in information reproducing apparatus, comprises:

an irradiation optical system for producing a laser beam of approximately circular cross-section and converging said laser beam as an approximately circular spot onto a recording portion of a recording medium having information recorded along a track thereon, wherein said irradiation optical system includes a light intensity modulator disposed in the optical path of said laser beam having a central portion for interrupting the center of said laser beam in cross-section and a peripheral portion for transmitting the periphery of said laser beam in cross-section; and

a detection optical system for guiding light reflected from said spot toward a photodetector, wherein said detection optical system includes a slit member arranged optically in front of a light receiving surface of said photodetector and having a slit opening for admitting said reflected light;

said slit opening being designed in such a manner that the longitudinal direction of said slit opening is substantially parallel to said track direction of said recording portion as viewed in said detection optical system, whereby the recorded data is reproduced by an output signal provided from said photodetector.

Preferably, when said slit member is optically projected on to said recording portion through said detection optical system or equivalent, the longitudinal direction of said slit opening in the shadow of said slit member on said recording portion is parallel to said track direction of said recording portion.

By the arrangement of the present invention as described above, the side lobes of the reflected light spot can be efficiently eliminated and the modulation degree of regenerated signal is increased in a high spatial frequency.

An embodiment of the present invention will now be described, by way of example only, with reference to the accompanying drawings, in which:

Fig. 1 is a schematic drawing of an optical and system of the present invention;

Fig. 2 is a front view of a grating shown in Fig. 1;

Fig. 3 is a front view of a slit member shown in Fig. 1;

Fig. 4 shows an arrangement of a slit member in the optical pickup device according to the present invention;

Fig. 5 is a front view of the shadow of the slit member; and

Fig. 6 is a graphic representation illustrating frequency characteristics which shows signal modulation degrees reproduced by RF detectors in the optical pickup devices of the present invention and comparative examples.

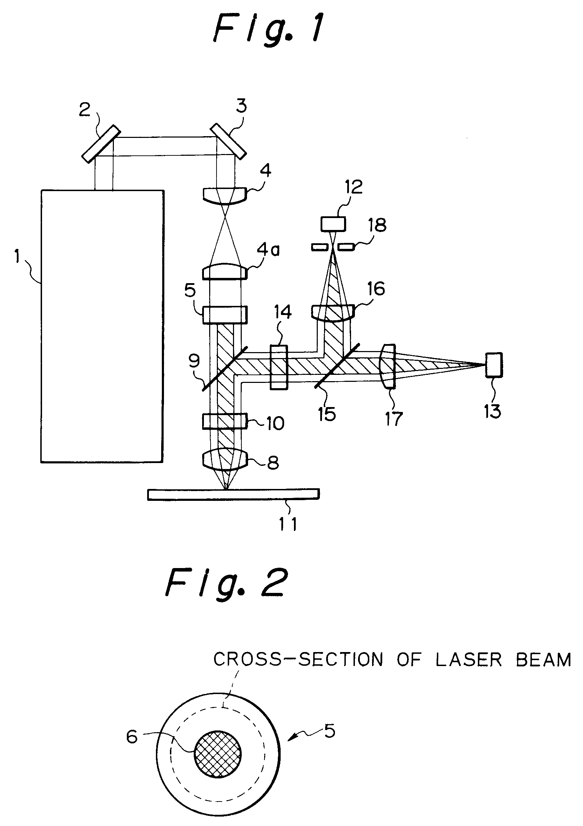

Fig. 1 is a schematic drawing of an optical pickup device of the present embodiment. In the irradiation optical system, a laser beam emitted from a laser source 1 is guided toward a grating 5 through mirrors 2 and 3 and beam expanders 4 and 4a. As shown in Fig. 2, a light intensity modulator 5 is placed in the optical path leading from the light source 1 to an objective lens 8 in order to decrease the light intensity near the pupil center of the objective lens 8 located optically downstream thereof. The light intensity modulator 5 comprises an amplitude filter 6 i.e. a central portion for interrupting the center of said laser beam in cross-section and a peripheral portion for transmitting the periphery of said laser beam in cross-section. After the laser beam passes through the modulator 5, the laser beam passes through a beam splitter 9 and a 1/4 wave plate 10. The objective lens 8 converges the laser beam onto the surface of an optical disk 11 as a circular spot with a very small diameter. In the irradiation optical system, the light at the central portion of the cross-section of the laser beam having approximately circular cross-section, is interrupted while the light in the peripheral portion is transmitted to the optical disk 11. In figure 1, the shaded portion indicates that the laser beam is not passing therein.

The optical disk 11 is relatively rotating or moving in relation to the optical pickup device so that the converged laser beam emitted from the objective lens 8 moves along a row of pits i.e. a track on the recording portion of the optical disk 11. The position of the optical pickup device or the objective lens is controlled in such a manner that the relative moving direction coincides with the track direction of the pit row.

The light reflected from the laser beam spot on the moving pit row passes through the 1/4 wave plate 10 via the objective lens 8 and is then deflected by the beam splitter 9. The detection optical system guides this reflected light toward an RF detector 12,i.e. a photo-detector,and a servo detector 13. In this way, this detection optical system comprises the objective lens 8, the 1/4 wave plate 10, the beam splitter 9, a 1/2 wave plate 14, a beam splitter 15, condenser lenses 16 and 17, and a slit member 18. The reflected laser beam passes through the 1/2 wave plate 14 and is separated by the beam splitter 15. One of the laser beams thus split is converged by the condenser lens 16 and is guided toward the light receiving surface of the RF detector 12 through the slit member 18. The recorded data or information is reproduced by an output signal provided from the RF detector 12.

The other of the separated laser beams is guided toward the light receiving surface of the servo detector 13 through the condenser lens 17. The position of the optical pickup device is controlled in accordance with an output signal provided from the servo detector 13.

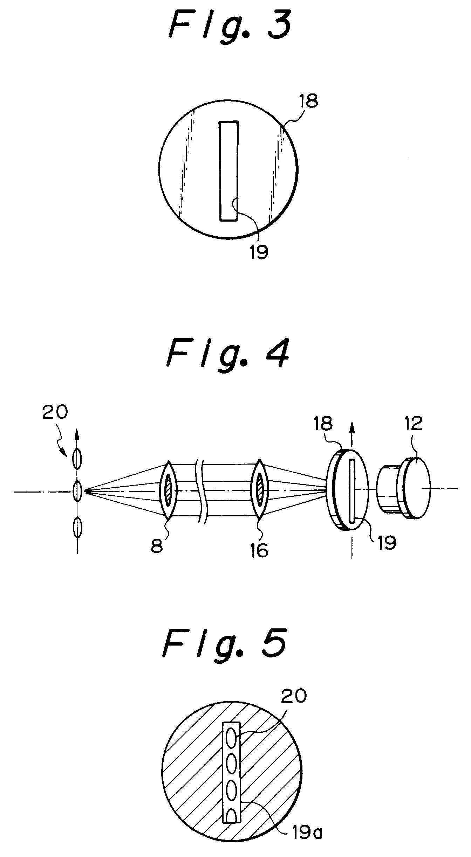

As shown in Fig. 3, the slit member 18 is provided with a slit opening 19 of a rectangular shape. As shown in Fig. 4 and Fig. 1, the slit member 18 is placed optically in front of and in parallel to the light receiving surface of the RF detector 12 in the detection optical system. The opening 19 of the slit member is designed in such a manner that the longitudinal direction of the opening 19a in the shadow of the slit member is in parallel to the track direction of the pit row 20,as shown in Fig. 5,when the slit member 18 is optically projected on the pit row through the detection optical system including the objective lens 8 and the condenser lens 16, etc.. As shown in Fig. 5, when the direction parallel to the longer side of the opening 19a in the slit shadow is aligned with the track direction of the pit row 20, the slit member 18 is placed on the reflected light spot in such a manner that the slit direction is in parallel to or coincident with the track direction. Further, the width of the shorter side of the slit opening is set within the first-order dark ring of the reflected light spot. The photodetection of such a dimensional determination of the slit is performed on the light receiving surface of RF detector 12.

Specifically, as shown in Fig. 4, the slit member 18 is placed in such a manner that the extending direction of the slit 19 is in parallel to the track direction of the pit row 20 when the image is formed on the optical disk 11 through the detection optical system (which is not shown in the figure except the objective lens 8 and the condenser lens 16).

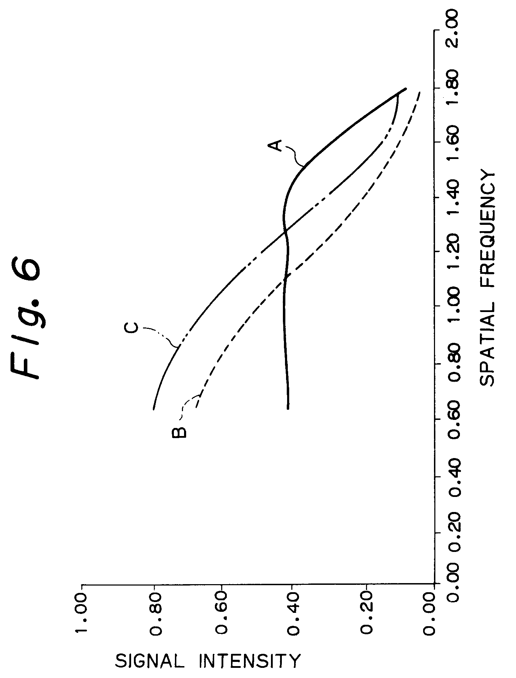

A frequency characteristic regenerated by the embodiment is measured together with comparative examples under conditions that the light intensity near the center of the light beam entering the pupil of the objective lens is interrupted in a circular form. The embodiment is in the case where the slit direction is in parallel to the track direction (solid line curve A). The comparative example B is in the case where the slit direction is perpendicular to the track direction (broken line curve B). The comparative example C is in the case where the slit member has a pin hole (two-dot chain line curve C). As shown in Fig. 6, the frequency characteristic of the modulation degree of a regenerated signal is greater than that of any comparative embodiments in the high spatial frequency of about 1.30 -1.70. Accordingly, this is advantageously effective for reproducing data from the optical disk in which data is recorded at a high density, and further the cross talk components can also be eliminated effectively.

As described above, the optical pickup device according to the present invention can increase the signal output of the photodetector in a high spatial frequency band and further efficiently regenerate the signal from the recorded optical medium in which data is recorded at a high density while eliminating cross talk components. This is because the side lobes of the reflected light spot can be efficiently eliminated and the modulation degree of the regenerated signal is increased at a high spatial frequency in the optical pickup device.

With regard to the light intensity modulator, it should be realised that the phrase "interrupting the center of the laser beam in cross-section" encompasses decreasing the intensity of the center of the beam with respect to that of the periphery, as well as completely blocking the light at the center.

## Claims

1.  An optical pickup device for use in information reproducing apparatus, comprising:

    an irradiation optical system for producing a laser beam of approximately circular cross-section and converging said laser beam as an approximately circular spot onto a recording portion of a recording medium having information recorded along a track thereon, wherein said irradiation optical system includes a light intensity modulator disposed in the optical path of said laser beam having a central portion for interrupting the center of said laser beam in cross-section and a peripheral portion for transmitting the periphery of said laser beam in cross-section; and

    a detection optical system for guiding light reflected from said spot toward a photodetector, wherein said detection optical system includes a slit member arranged optically in front of a light receiving surface of said photodetector and having a slit opening for admitting said reflected light;

    said slit opening being designed in such a manner that the longitudinal direction of said slit opening is substantially parallel to said track direction of said recording portion as viewed in said detection optical system, whereby the recorded data is reproduced by an output signal provided from said photodetector.

2.  An optical pickup device according to claim 1, wherein, when said slit member is optically projected on to said recording portion through said detection optical system or equivalent, the longitudinal direction of said slit opening in the shadow of said slit member on said recording portion is substantially parallel to said track direction of said recording portion.

3.  An optical pickup device according to claim 1 or 2, wherein the width of said slit is set within the first-order dark ring of the reflected light spot.

# Fig. 1

# Fig. 2

CROSS-SECTION OF LASER BEAM

# Fig. 3

# Fig. 4

# Fig. 5

Fig. 6